# EUROPEAN PATENT APPLICATION

(11) **EP 3 651 305 A1**
(43) Date of publication of application: **13.05.2020**
(21) Application number: 18828186.9
(22) Date of filing: 19.04.2018
(51) Int. Cl.: H02J 3/38

(54) **CHAINED MULTI-PORT GRID-CONNECTED INTERFACE APPARATUS AND CONTROL METHOD**

(30) Priority: 06.07.2017 CN 201710544441
(71) Applicant: NR Electric Co., Ltd., Nanjing, Jiangsu 211106 (CN); NR Engineering Co., Ltd, Nanjing, Jiangsu 211106 (CN)
(72) Inventor: XIE, Yeyuan, Nanjing Jiangsu 211106 (CN); WANG, Yu, Nanjing Jiangsu 211106 (CN); LI, Haiying, Nanjing Jiangsu 211106 (CN); LIAN, Jianyang, Nanjing Jiangsu 211106 (CN); ZHANG, Zhongfeng, Nanjing Jiangsu 211106 (CN); TIAN, Jie, Nanjing Jiangsu 211106 (CN)
(74) Representative: Kurig, Thomas
(86) International application number: PCT/CN2018/083773
(87) International publication number: WO 2019/007135

(57) **Abstract**

Provided are a chained multi-port grid-connected interface apparatus and a control method therefor. The chained multi-port grid-connected interface apparatus comprises: a commutation chain, at least one direct-current converter, and at least one direct-alternating converter, wherein the commutation chain is formed by at least two sub-module units connected in series in the same direction, one end of the direct-current converter is connected to a direct-current end of the sub-module unit, and the other end is a direct-current interaction port of the chained multi-port grid-connected interface apparatus, a direct-current connection end of the direct-alternating converter is connected to the direct-current end of the sub-module unit, and an alternating-current connection end is an alternating-current interaction port of the chained multi-port grid-connected interface apparatus. The chained multi-port grid-connected interface apparatus provides multiple ports independent from each other for the access of a low-voltage power supply, loads and an energy storage unit, realizing plug and play, thereby greatly reducing the implementation difficulty and cost.

## Description

### TECHNICAL FIELD

The invention belongs to the field of power electronic inverters, and particularly relates to a chained multi-port grid-connected interface apparatus and a control method.

### BACKGROUND

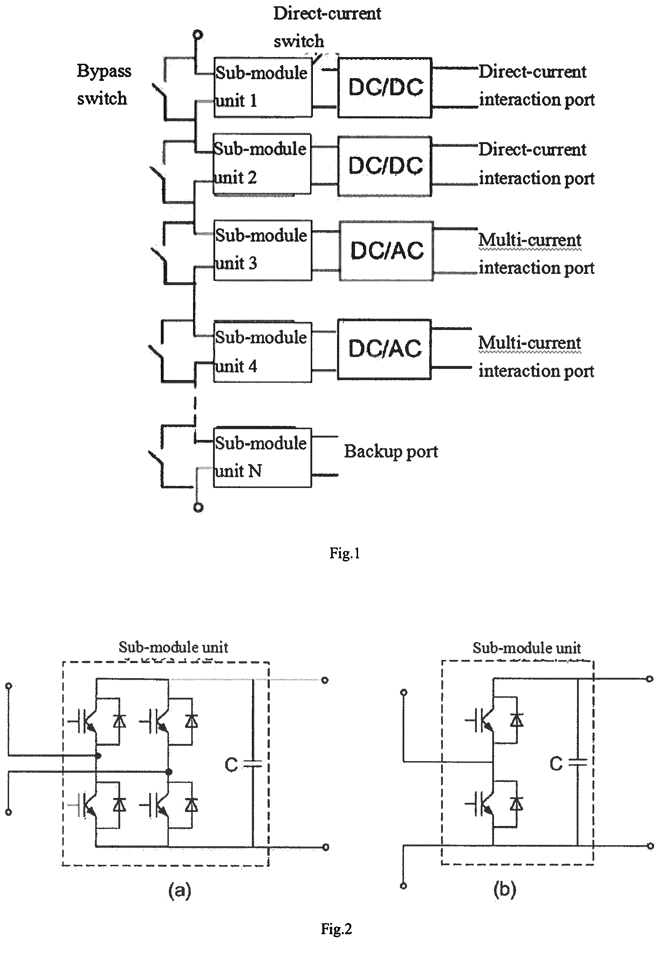

In recent years, with the continuous progress of distributed power generation technology and the increasingly mature power electronics technology, the distributed power generation is applied in power grids in an increasingly extensive manner, and gradually becomes an effective supplement to large power grids. Distributed power supplies, loads and energy storage devices constitute a microgrid. There are different types of distributed power supplies, loads and energy storage devices, including different direct current or alternating current, voltage levels and capacities. How to economically and effectively connect the above units and perform unified management on them is a difficult problem. The technical schemes disclosed in the prior arts include the following types. Prior art 1: Master's thesis "Research on Multi-port Two-way Energy Router for EnergyInternet" by Wang Yuting with Beijing Jiaotong University gives a traditional solution. Figs. 1-7 in the above thesis show a basic structure of a direct-current microgrid. The structure is complex, and there are a large number of DC/DC and DC/AC converters. In order to embody the advantages of direct-current transmission, a direct-current bus is usually of medium-voltage grade, such as 35 kV/10 kV, while the voltage range of a distributed power supply is 200-1000 V; in this case, a direct-current transformer with a high transformation ratio or an alternating-direct converter with a high transformation ratio is required, which results in high cost. It also has the disadvantage of low reliability. When the direct-current bus fails or a unit hung on the direct-current bus fails, other units on the same bus will be affected, and a direct-current breaker is needed to isolate the failure. Prior art 2: Master's thesis "Research on Building Microgrid Based on Cascaded Power Electronic Transformer" by Huang Shuangping with Hunan University provides another solution. Figs. 1-7 and 1-8 in the above paper describe the idea of this solution. Figs. 1-8 show a structure of a converter which converts high-voltage alternating current to low-voltage direct current. The main advantage of this topology structure is to avoid the use of a high-voltage direct-current bus and to eliminate the need for a large number of converters with a high transformation ratio, which is equivalent to replacing a large number of small-capacity converters with a large-capacity converter. However, this topology structure can only provide a low-voltage direct-current port, and a low-voltage alternating-current port needs to pass through a DC/AC converter. As can be seen from Figs. 1-7, the direct-current port can form a direct-current bus, the alternating-current port forms an alternating-current bus, and a large number of distributed power supplies are connected to the direct-current port through the converter. The main disadvantages of this structure are: (1) the structure is complex: the converter of Figs. 1-8 are mainly used to provide the direct-current bus port; the converter itself has high complexity, and the rear stage of the chained structure requires a large number of DC/DC converters; the output sides of the converters are directly connected in parallel, thus the control complexity is high; the low-voltage alternating-current bus port is inverted from the direct-current bus port, and electric energy comes from the direct-current bus and occupies the power capacity of the direct-current bus; AC/DC power consumption is not completely decoupled, which also increases the difficulty of coordinated control; (2) there are many links and efficiency is low: the efficiency is a key indicator of power electronic equipment; the structure in Figs. 1-8 has power electronic converters on multiple links, and the overall efficiency of the equipment is low; (3) equipment reliability is low: a large number of DC/DC converters are needed in the rear stage of the chained structure, and the output sides of the converters are connected in parallel, which is not conducive to fault isolation, and once the low-voltage direct-current bus fails, all DC/DC converters in the front stage and DC/AC inverters in the rear stage will be affected.

The essential defect of the prior art is that only a single port is adopted to adapt to different types of units, which leads to high complexity and low cost performance. All of the above schemes have a direct-current bus, so fault isolation is difficult and the reliability is low.

### BRIEF SUMMARY

The invention aims to solve the defects of the above schemes, and to provide a plurality of mutually independent ports for the access of low-voltage power supplies, loads and energy storage units, enable each low-voltage unit to be reliably connected to a high-voltage alternating-current power grid, and realize plug and play, thereby greatly reducing the implementation difficulty and cost.

In order to achieve the above mentioned purpose, the present invention provides a chained multi-port grid-connected interface apparatus, specifically as follows:

A chained multi-port grid-connected interface apparatus comprises a commutation chain, the commutation chain is formed by at least two sub-module units connected in series, each sub-module unit comprises a power conversion unit and a capacitor, a positive electrode and a negative electrode of each capacitor are led out to be defined as direct-current ends of the sub-module units, one end of each power conversion unit is connected to the corresponding capacitor in parallel, the other end is defined as an alternating-current end of the corresponding sub-module unit, and the alternating-current ends of all the sub-modules are sequentially connected end to end. The chained multi-port grid-connected interface apparatus further comprises at least one direct-current converter, and at least one direct-alternating converter, wherein the direct-current converters can convert one direct current to another direct current with different output characteristics, one end of each direct-current converter is connected to the direct-current end of the corresponding sub-module unit, the other end is defined as a direct-current interaction port of the grid-connected interface apparatus, the direct-alternating converters can convert direct current into alternating current, a direct-current connection end of each direct-alternating converter is connected to the direct-current end of the corresponding sub-module unit, and an alternating-current connection end is defined as an alternating-current interaction port of the grid-connected interface apparatus.

The interface apparatus at least comprises a direct-current end of one sub-module unit which is not connected to the direct-alternating converters and the direct-current converters, and the idle direct-current end is defined as a backup port.

The interface apparatus comprises at least two direct-current interaction ports and at least two alternating-current interaction ports.

The interface apparatus comprises at least two alternating-current interaction ports, the alternating-current interaction ports are connected to a multi-winding transformer, each group of primary sides of the multi-winding transformer is connected to one alternating-current interaction port, and the secondary side of the multi-winding transformer is defined as a first medium voltage alternating-current port.

The interface apparatus comprises at least two alternating-current interaction ports, the alternating-current interaction ports are connected in series, and the serially connected port is defined as a second medium voltage alternating-current port.

The interface apparatus comprises at least two direct-current interaction ports, and the direct-current interaction ports are connected in series to be defined as a medium voltage direct-current port.

The amplitude and phase of the output voltage of the alternating-current interaction ports in the interface apparatus can be independently adjusted, and the amplitude of the output voltage of the direct-current interaction ports can be independently adjusted.

Each sub-module unit is an H-bridge power module unit composed of four groups of fully controlled power semiconductor devices.

Each sub-module unit is a half-bridge power module unit composed of two groups of fully controlled power semiconductor devices.

The interface apparatus further comprises at least one bypass switch, and the bypass switches are connected in parallel to the alternating-current ends of the sub-module units.

The interface apparatus further comprises at least one direct-current switch, and the direct-current switches are connected in series between the sub-module units and the direct-current converters or the direct-alternating converters.

The invention further comprises a control method for the chained multi-port grid-connected interface apparatus, and when the apparatus receives a start command, the control method comprises the following steps:
(1) starting power converter units in the sub-module units in the commutation chain of the grid-connected interface apparatus;
(2) performing closed-loop control on the voltage of the direct-current end of each sub-module to make the voltage of the direct-current end of each sub-module stable;
(3) after the voltage of the direct-current end of each sub-module is stable, starting the direct-current converters and the direct-alternating converters in the chained multi-port grid-connected interface apparatus, and controlling the on-off of power semiconductor devices in the direct-current converters and the direct-alternating converters, to enable the current flowing through the direct-current converters and the direct-alternating converters to be 0;
(4) controlling the on-off of the power semiconductor devices in the direct-current converters and the direct-alternating converters, to enable the current flowing through the direct-current converters and the direct-alternating converters to be gradually increased till the current reaches a target value.

The invention further comprises a control method for the chained multi-port grid-connected interface apparatus, and when the apparatus receives a stop command, the control method comprises the following steps:
(1) controlling the on-off of power semiconductor devices in the direct-current converters and the direct-alternating converters, to enable the current flowing through the direct-current converters and the direct-alternating converters to be gradually decreased till the current reaches 0;
(2) stopping the direct-current converters and the direct-alternating converters in the chained multi-port grid-connected interface apparatus, and shutting down the power semiconductor device;
(3) stopping the sub-module units in the commutation chain of the grid-connected interface apparatus, and stopping the whole apparatus.

The invention further comprises a control method for the chained multi-port grid-connected interface apparatus, and when a sub-module unit in the apparatus fails, the control method comprises the following steps:
(1) making a power semiconductor device in the broken-down sub-module unit stop working, and simultaneously closing the bypass switch connected in parallel to the sub-module unit;
(2) stopping the direct-current converters and the direct-alternating converters in the chained multi-port grid-connected interface apparatus, and shutting down the power semiconductor device. As a preferred scheme, when the power semiconductor device is shut down, the corresponding direct-current switch can be separated simultaneously.

The invention further comprises a control method for the chained multi-port grid-connected interface apparatus, and when a direct-current converter or direct-alternating converter in the apparatus fails, the control method comprises the following steps:
(1) making a power semiconductor device of the broken-down direct-current converter or direct-alternating converter stop working;
(2) separating the corresponding direct-current switch.

The invention further comprises a system of the chained multi-port grid-connected interface apparatus. The system comprises the chained multi-port grid-connected interface apparatus and five low-voltage units, namely a direct-current power supply, an alternating-current power supply, an energy storage unit, a direct-current load and an alternating-current load, the alternating-current interaction ports and the direct-current interaction ports in the interface apparatus are at least connected to two of the above two kinds of low-voltage units to form the system of the chained multi-port grid-connected interface apparatus, wherein, the direct-current power supply, the energy storage unit and the direct-current load are connected to the direct-current interaction ports, and the alternating-current power supply and the alternating-current load are connected to the alternating-current interaction ports.

The invention further comprises an inverter comprising the chained multi-port grid-connected interface apparatus. The inverter comprises three phases, each phase comprises an upper bridge arm and a lower bridge arm, each bridge arm comprises series connection of a reactor and the interface apparatus, the upper bridge arm and the lower bridge arm are combined to form a phase unit, and a connection point of the upper bridge arm and the lower bridge arm is a midpoint; leading-out ends of the three upper bridge arms are connected together as a positive end of the inverter, and leading-out ends of the three lower bridge arms are connected together as a negative end of the inverter; and the midpoints of the bridge arms of the three phases of the inverter are connected to a power grid, the positive end of the inverter is connected to a positive electrode of a direct-current transmission line, and the negative end of the inverter is connected to a negative electrode of the direct-current transmission line.

The invention further comprises an inverter comprising the chained multi-port grid-connected interface apparatus. The inverter comprises three phase units, each phase unit comprises series connection of the interface apparatus and a reactor, one ends of the three phase units are connected to form star connection, and the other ends of the three phase units are connected to three phases on a power grid side respectively.

The invention further comprises an inverter comprising the chained multi-port grid-connected interface apparatus. The inverter comprises three phase units, each phase unit comprises series connection of the interface apparatus and a reactor, the three phase units are connected end to end to form angle connection, and the three connection points of end-to-end connection are connected to three phases on a power grid side respectively.

The invention has the beneficial effects that:
(1) the direct-current sides of the sub-module units in the commutation chain are led out as a grid-connected interface of a low-voltage energy exchange unit, and the direct-current voltage value of the energy exchange unit is matched with the direct-current voltage value of the sub-module units to realize low-voltage direct-current connection; the alternating-current side of the sub-module units in the commutation chain realize high-voltage output in a cascade mode; in this way, high-transformation ratio boost connection of low-voltage direct-current to an alternating-current power grid is realized, thus eliminating a direct-current transformer with a high transformation ratio;
(2) the grid-connected interface apparatus can be used to form a chained inverter, such as static var compensator or modular multilevel inverter; the low-voltage units in the grid-connected interface apparatus can realize active power interaction with the power grid; meanwhile, the inverter or static var compensator can also perform reactive compensation, realizing decoupling control of active power and reactive power, and maximizing the utilization rate of equipment;
(3) a plurality of power supplies, loads and energy storage units can be connected to the direct-current interaction ports and the alternating current interaction ports in the grid-connected interface apparatus, there may be different access units for the same commutation chain, the configuration number of the access units can be less than or equal to the number of the sub-module units, the configuration is more flexible, each unit is independently controlled, and plug and play is realized;
(4) all components in a direct-current distribution network (energy storage unit, alternating-current power supply, direct-current power supply, alternating-current load, direct-current load) can be connected through the direct-current converters and the direct-alternating converters in the grid-connected interface apparatus, and a complete microgrid system is formed by the grid-connected interface apparatus; a centralized mode is adopted to facilitate the management and realization of the control function of the whole microgrid;
(5) through the connection of the sub-module units, the direct-current buses of the sub-module units are independent of each other, and compared with the common bus mode, this mode is beneficial to realizing fault isolation and has higher reliability;
(6) redundancy can be easily realized; the traditional scheme increases capacity through parallel connection, which makes redundancy difficult to realize, and once a single module fails, the whole system will be out of operation; in the present invention, the sub-module units are provided with the bypass switches, when a sub-module unit fails, the failure can be bypassed, and when a direct-current converter or direct-alternating converter fails, the corresponding direct-current switch can be separated, and the failure range can be quickly reduced through the switches;
(7) the direct-current converters and the direct-alternating converters in the grid-connected interface apparatus can be designed integrally with the sub-module units, realizing high engineering realizability and saving space;
(8) there is no need to obtain energy independently; the power semiconductor devices and control loops thereof in the direct-current converters and the direct-alternating converters need appropriate power supply and can share an energy extraction loop with the sub-module units;
(9) the direct-current converters and the direct-alternating converters may share cooling equipment with the sub-module units instead of being provided with separate cooling equipment.

### BRIEF DESCRIPTION OF THE DRAWINGS

Fig. 1 is a topological diagram of a chained multi-port grid-connected interface apparatus of the present invention;
Fig. 2 is a topological diagram of sub-module units in a chained multi-port grid-connected interface apparatus of the present invention;
Fig. 3 is an embodiment of a DC/DC conversion device in the chained multi-port grid-connected interface apparatus of the present invention;
Fig. 4 is an embodiment of a DC/AC conversion device in the chained multi-port grid-connected interface apparatus of the present invention;
Fig. 5 is a first embodiment of an inverter of the present invention;
Fig. 6 is a second embodiment of an inverter of the present invention;
Fig. 7 is a third embodiment of an inverter of the present invention;
Fig. 8 is an embodiment of the prior art under application scenario 1;
Fig. 9 is an embodiment of the present invention under application scenario 1; and
Fig. 10 is an embodiment of the present invention under application scenario 2.

### DETAILED DESCRIPTION

Hereinafter, the technical scheme of the present invention will be described in detail with reference to the accompanying drawings.

As shown in Fig. 1, a chained multi-port grid-connected interface apparatus comprises a commutation chain, the commutation chain is formed by at least two sub-module units connected in series, each sub-module unit comprises a power conversion unit and a capacitor, a positive electrode and a negative electrode of each capacitor are led out to be defined as direct-current ends of the sub-module units, one end of each power conversion unit is connected to the corresponding capacitor in parallel, the other end is defined as an alternating-current end of the corresponding sub-module unit, and the alternating-current ends of all the sub-modules are sequentially connected end to end. The chained multi-port grid-connected interface apparatus further comprises at least one direct-current converter, and at least one direct-alternating converter, wherein the direct-current converters can convert one direct current to another direct current with different output characteristics, one end of each direct-current converter is connected to the direct-current end of the corresponding sub-module unit, the other end is defined as a direct-current interaction port of the grid-connected interface apparatus, the direct-alternating converters can convert direct current into alternating current, a direct-current connection end of each direct-alternating converter is connected to the direct-current end of the corresponding sub-module unit, and an alternating-current connection end is defined as an alternating-current interaction port of the grid-connected interface apparatus.

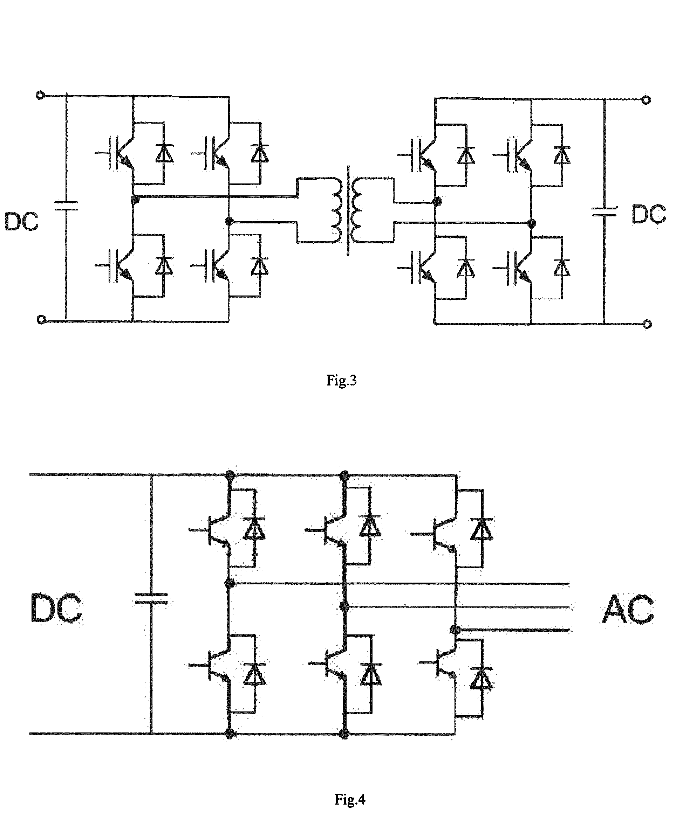

The present embodiment comprises two direct-current interaction ports and two alternating-current interaction ports. The topology of the direct-current converters is shown in Fig. 3, and the topology of the direct-alternating converters is shown in Fig. 4.

The interface apparatus at least comprises a direct-current end of one sub-module unit which is not connected to the direct-alternating converters or the direct-current converters, and the above idle direct-current end is defined as a backup port.

As shown in Fig. 1, the present embodiment comprises a backup port.

As a preferred scheme, the interface apparatus comprises at least two direct-current interaction ports and at least two alternating-current interaction ports.

The interface apparatus comprises at least two alternating-current interaction ports, the alternating-current interaction ports are connected to a multi-winding transformer, each group of primary sides of the multi-winding transformer is connected to one alternating-current interaction port, and the secondary side of the multi-winding transformer is defined as a first medium voltage alternating-current port.

The interface apparatus comprises at least two alternating-current interaction ports, the alternating-current interaction ports are connected in series, and the serially connected port is defined as a second medium voltage alternating-current port.

The interface apparatus comprises at least two direct-current interaction ports, and the direct-current interaction ports are connected in series to be defined as a medium voltage direct-current port.

The amplitude and phase of the output voltage of the alternating-current interaction ports in the interface apparatus can be independently adjusted, and the amplitude of the output voltage of the direct-current interaction ports can be independently adjusted.

Each sub-module unit is an H-bridge power module unit composed of four groups of fully controlled power semiconductor devices, as shown in Fig. 2(a).

Each sub-module unit is a half-bridge power module unit composed of two groups of fully controlled power semiconductor devices, as shown in Fig. 2(b).

As a preferred scheme, the interface apparatus further comprises at least one bypass switch, and the bypass switches are connected in parallel to the alternating-current ends of the sub-module units.

As a preferred scheme, the interface apparatus further comprises at least one direct-current switch, and the direct-current switches are connected in series between the sub-module units and the direct-current converters or the direct-alternating converters.

The invention further comprises a control method for the chained multi-port grid-connected interface apparatus, and when the apparatus receives a start command, the control method comprises the following steps:
(1) starting power converter units in the sub-module units in the commutation chain of the grid-connected interface apparatus;
(2) performing closed-loop control on the voltage of the direct-current end of each sub-module to make the voltage of the direct-current end of each sub-module stable;
(3) after the voltage of the direct-current end of each sub-module is stable, starting the direct-current converters and the direct-alternating converters in the chained multi-port grid-connected interface apparatus, and controlling the on-off of power semiconductor devices in the direct-current converters and the direct-alternating converters, to enable the current flowing through the direct-current converters and the direct-alternating converters to be 0;
(4) controlling the on-off of the power semiconductor devices in the direct-current converters and the direct-alternating converters, to enable the current flowing through the direct-current converters and the direct-alternating converters to be gradually increased till the current reaches a target value.

The invention further comprises a control method for the chained multi-port grid-connected interface apparatus, and when the apparatus receives a stop command, the control method comprises the following steps:
(1) controlling the on-off of power semiconductor devices in the direct-current converters and the direct-alternating converters, to enable the current flowing through the direct-current converters and the direct-alternating converters to be gradually decreased till the current reaches 0;
(2) stopping the direct-current converters and the direct-alternating converters in the chained multi-port grid-connected interface apparatus, and shutting down the power semiconductor device.
(3) stopping the sub-module units in the commutation chain of the grid-connected interface apparatus, and stopping the whole apparatus.

The invention further comprises a control method for the chained multi-port grid-connected interface apparatus, and when a sub-module unit in the apparatus fails, the control method comprises the following steps:
(1) making a power semiconductor device in the broken-down sub-module unit stop working, and simultaneously closing the bypass switch connected in parallel to the sub-module unit;
(2) stopping the direct-current converters and the direct-alternating converters in the chained multi-port grid-connected interface apparatus, and shutting down the power semiconductor device. As a preferred scheme, when the power semiconductor device is shut down, the corresponding direct-current switch can be separated simultaneously.

The invention further comprises a control method for the chained multi-port grid-connected interface apparatus, and when a direct-current converter or direct-alternating converter in the apparatus fails, the control method comprises the following steps:
(1) making a power semiconductor device of the broken-down direct-current converter or direct-alternating converter stop working;
(2) separating the corresponding direct-current switch.

The invention further comprises a system of the chained multi-port grid-connected interface apparatus. The system comprises the chained multi-port grid-connected interface apparatus and five low-voltage units, namely a direct-current power supply, an alternating-current power supply, an energy storage unit, a direct-current load and an alternating-current load. The alternating-current interaction ports and the direct-current interaction ports in the interface apparatus are at least connected to two of the low-voltage units to form the system of the chained multi-port grid-connected interface apparatus, the direct-current power supply, the energy storage unit and the direct-current load are connected to the direct-current interaction ports, and the alternating-current power supply and the alternating-current load are connected to the alternating-current interaction ports.

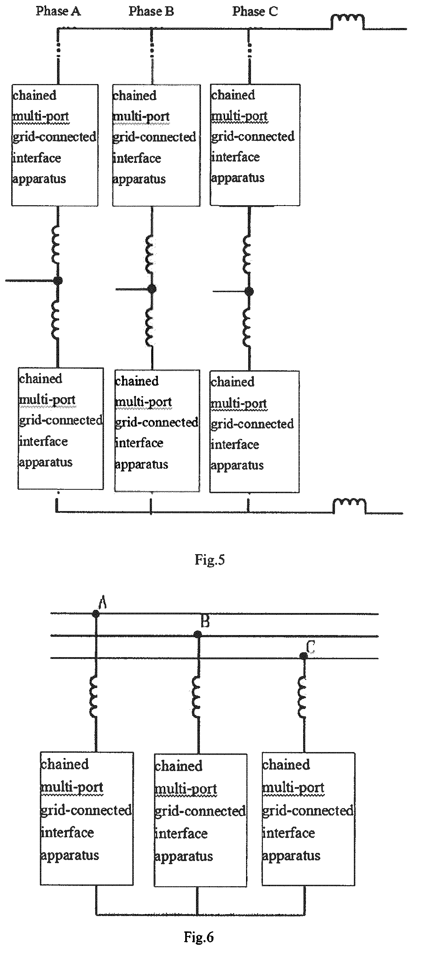

The invention further comprises an inverter comprising the chained multi-port grid-connected interface apparatus, as shown in Fig. 5. The inverter comprises three phases, each phase comprises an upper bridge arm and a lower bridge arm, each bridge arm comprises series connection of a reactor and the interface apparatus, the upper bridge arm and the lower bridge arm are combined to form a phase unit, and a connection point of the upper bridge arm and the lower bridge arm is a midpoint; leading-out ends of the three upper bridge arms are connected together as a positive end of the inverter, and leading-out ends of the three lower bridge arms are connected together as a negative end of the inverter; and the midpoints of the bridge arms of the three phases of the inverter are connected to a power grid, the positive end of the inverter is connected to a positive electrode of a direct-current transmission line, and the negative end of the inverter is connected to a negative electrode of the direct-current transmission line.

The invention further comprises an inverter comprising the chained multi-port grid-connected interface apparatus, as shown in Fig. 6. The inverter comprises three phase units, each phase unit comprises series connection of the interface apparatus and a reactor, one ends of the three phase units are connected to form star connection, and the other ends of the three phase units are connected to three phases on a power grid side respectively.

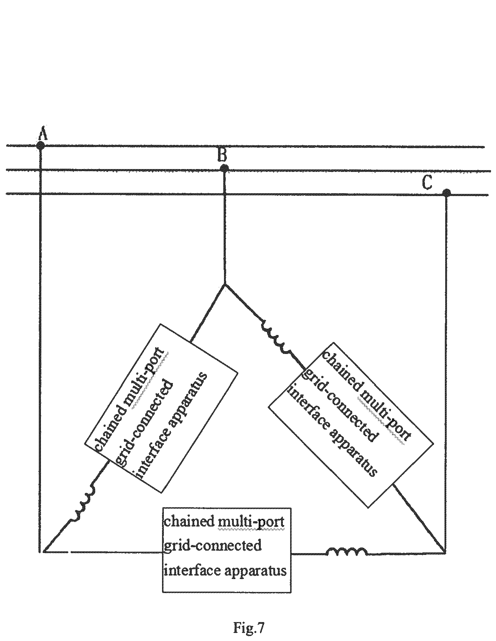

The invention further comprises an inverter comprising the chained multi-port grid-connected interface apparatus, as shown in Fig. 7. The inverter comprises three phase units, each phase unit comprises series connection of the interface apparatus and a reactor, the three phase units are connected end to end to form angle connection, and the three connection points of end-to-end connection are connected to three phases on a power grid side respectively.

The invention can be applied to application scenarios such as direct-current networks, alternating-current and direct-current hybrid distribution networks, and microgrids, which require low-voltage units to be connected to medium-high voltage networks, and can also be applied to medium-voltage alternating-current loads such as medium-voltage motor frequency converters.

The following application scenario of a microgrid system on an island and a medium-voltage motor frequency converter are used to illustrate the specific embodiments of the present invention.

### Scenario 1: a microgrid system on an island, comprising the following requirements:

(1) medium-voltage power transmission: electric energy on the island is transmitted in the form of alternating current at 10 kV;
(2) alternating-voltage power supply: comprising three groups (300 kW) of wind power generating units, with an output of alternating-current three-phase 690 V;
(3) direct-current power supply: comprising two groups (500 kW) of photovoltaic power generation power supplies, with an output of 600V DC;
(4) energy storage unit: a group of energy storage units (800 kW) composed of sodium-sulfur batteries, with an output of 700V DC;
(5) alternating-current load: comprising two groups of alternating-current loads for power supply in the island, that is, a group of single-phase 220 V alternating-current load (200 kW) and a group of three-phase 380 V alternating-current load (300 kW).

Generally, three chained multi-port grid-connected apparatuses are required to form an inverter, each of which forms one phase, so three phases ABC are formed. In order to simplify the analysis, only one phase is listed in this scenario.

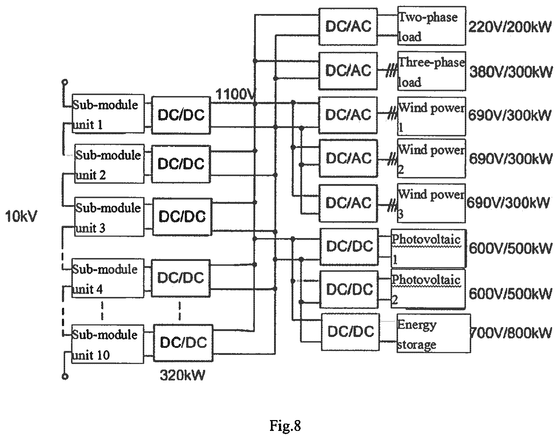

If the scheme in the prior art is adopted to solve the problem in this application scenario, as shown in Fig. 8, the total capacity reaches 3200 kW and the voltage on the high-voltage side is 10 kV, ten sub-module units are provided, and each sub-module unit is equipped with a DC/DC unit with a design capacity of 320 kW; and the outputs of the DC/DC units are connected in parallel to provide a 1100 V direct-current bus with a total capacity of 3200 kW. Since the demand for electricity is involved with a variety of power systems, based on the 1100 V direct-current bus, a plurality of DC/DC units and DC/AC units are also required to match the power supplies and loads of different power systems. The overall structure is complex. In this scenario, a total of thirteen DC/DC converters and five DC/AC converters are required.

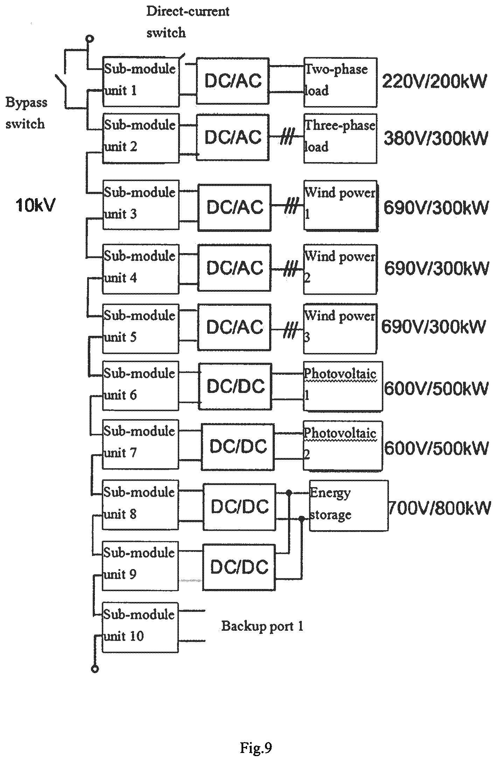

If the present invention is adopted to solve the problem in this application scenario, as shown in Fig. 9, the commutation chain in the present embodiment is composed of ten sub-module units connected in series, and the alternating-current ends of the ten sub-modules are connected end to end in sequence and connected to the 10 kV alternating-current high-voltage side. For the present embodiment, five groups of DC/AC converters and four groups of DC/DC converters are included, and five independent alternating-current interaction ports and four independent direct-current interaction ports are provided. The alternating-current interaction ports are connected to three groups (300 kW) of wind power generation units, one group of single-phase load and one group of three-phase load. The direct-current interaction ports are connected to two groups of photovoltaic power generation units and one group of energy storage units.

By adopting the scheme of the invention, the total capacity does not need to be considered, and the capacity of each sub-module unit and the DC/DC or DC/AC converter only needs to be greater than or equal to the capacity required by the ports. Generally, the capacity of each sub-module is designed to be the same, so as to be beneficial to engineering design and production. For this scenario, the capacity of most units to be connected is not greater than 500 kW; and for the energy storage units, the capacity is 800 kW, parallel connection of two units can be adopted, and the configuration is very flexible, greatly facilitating the engineering design. Each DC/DC or DC/AC converter is independently controlled, and the port voltage can be adjusted. Through the adjustment of each converter control strategy and control target, the access adaptation of different electrical units in the working range is realized. Compared with the prior art, the invention also has the following advantages:
(1) compared with the scheme of the prior art, the present scheme requires three DC/DC converters and five DC/AC converters, thus greatly reducing the cost;
(2) one power conversion link is eliminated: in the prior art, there are two power conversion links between the sub-module units and the connected units; however, the present invention only needs one power conversion link, thus having obvious advantages in terms of efficiency;
(3) in the prior art, there is a low-voltage direct-current bus, which is connected to the secondary sides of the ten DC/DC converters in the front stage and to the primary sides of the DC/DC converters and DC/AC converters in the rear stage; once the direct-current bus fails, all thirteen power converters will be affected, causing the equipment to stop running completely; and after a single power converter fails, it is also difficult to completely cut it off from the system, so it is necessary to arrange a direct-current switch on the bus side of each power converter, resulting in high cost and expense; in the present invention, there is no common bus, and each unit is relatively independent; when a sub-module fails, it can be removed from the system in a bypass mode, only one unit is affected; when a power converter fails, the corresponding direct-current switch can be separated; the direct-current switches are optional, and if the direct-current switches are not configured, the broken-down unit can also be removed by the bypass switches, which can quickly reduce the fault range; compared with the scheme of the prior art, the present invention has obvious advantages in reliability;
(4) compared with the scheme of the prior art, the present invention can expand capacity more easily; in this application scenario, assuming that a new photovoltaic power generation unit needs to be connected to the system, the addition of the new unit leads to an increase in the total capacity of the equipment, and the total capacity of the ten DC/DC converters in the front stage exceeds the original design range, so it is difficult to expand capacity at this point; meanwhile, it is very costly to increase the capacity of ten DC/DC converters, and the addition of sub-module units of the commutation chain requires massive changes to the original system structure; however, the device of the present invention has a backup port, and the new photovoltaic power generation unit can be connected simply by adding one DC/DC converter to the backup port; generally, one inverter has ABC three phases and three commutation chains, so that there will be a large number of backup ports; reserving the above backup port does not increase any cost and the utilization rate of equipment will not be affected; however, for the prior art, the capacity of the ten DC/DC converters needs to be increased for capacity reservation, thus causing additional cost.

### Scenario 2: medium-voltage motor frequency converter

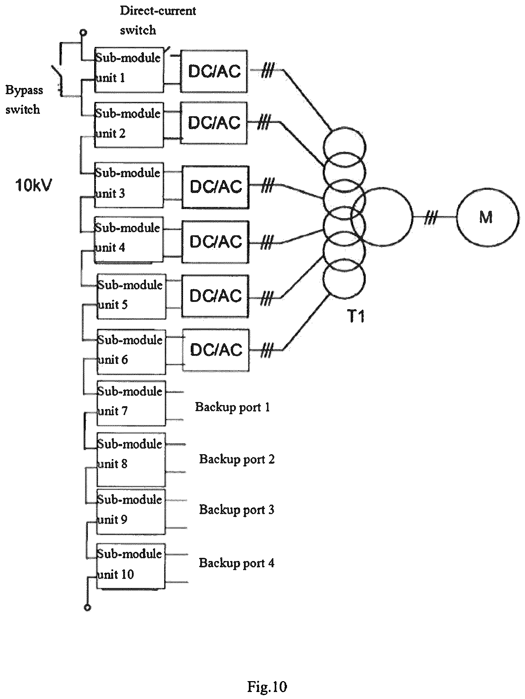

As shown in Fig. 10, in the scheme of the present invention, the primary sides of the multi-winding transformer can be connected to the alternating-current interaction ports; in the present embodiment, ten sub-module units and six groups of DC/AC converters are included, and six alternating-current interaction ports can be provided; the multi-winding transformer comprises six primary sides which are connected to the six alternating-current interaction ports in one-to-one correspondence; the secondary side of the multi-winding transformer is connected to a 6 kV medium-voltage alternating-current motor; and by controlling the duty ratio of a DC/AC inverter connected to the sub-modules, the output alternating-current frequency can be controlled, and the rotating speed or rotating torque of a medium-voltage alternating-current motor load can be adjusted. The present embodiment also comprises four backup ports for capacity expansion or access to other types of power supplies or loads.

The above embodiments only illustrate the technical idea of the present invention, and cannot be used to limit the protection scope of the present invention. Any changes made on the basis of the technical scheme according to the technical idea proposed by the present invention fall within the protection scope of the present invention.

## Claims

1. A chained multi-port grid-connected interface apparatus, comprising a commutation chain, the commutation chain being formed by at least two sub-module units connected in series, each sub-module unit comprising a power conversion unit and a capacitor, a positive electrode and a negative electrode of each capacitor being led out to be defined as direct-current ends of the sub-module unit, one end of each power conversion unit being connected to the corresponding capacitor in parallel, the other end of the power conversion unit being defined as an alternating-current end of the sub-module unit, and the alternating-current ends of the sub-modules are sequentially connected end-to-end; **characterized in that**,
the chained multi-port grid-connected interface apparatus further comprises at least one direct-current converter and at least one direct-alternating converter, wherein,
the direct-current converter converts one direct current to another direct current with different output characteristics, one end of the direct-current converter is connected to the direct-current end of the sub-module unit, the other end of the direct-current converter is defined as a direct-current interaction port of the grid-connected interface apparatus,
the direct-alternating converter converts a direct current into an alternating current, a direct-current connection end of the direct-alternating converter is connected to the direct-current end of the sub-module unit, and an alternating-current connection end of the direct-alternating converter is defined as an alternating-current interaction port of the grid-connected interface apparatus.

2. The chained multi-port grid-connected interface apparatus according to claim 1, **characterized in that** the interface apparatus at least comprises an idle direct-current end, and the idle direct-current end is defined as a backup port without being connected to the direct-alternating converter or the direct-current converter.

3. The chained multi-port grid-connected interface apparatus according to claim 1, **characterized in that** the interface apparatus comprises at least two direct-current interaction ports and at least two alternating-current interaction ports.

4. The chained multi-port grid-connected interface apparatus according to claim 1, **characterized in that** the interface apparatus comprises at least two alternating-current interaction ports, the alternating-current interaction ports are connected to a multi-winding transformer, each group of primary sides of the multi-winding transformer are connected to one alternating-current interaction port, and the secondary side of the multi-winding transformer is defined as a first medium voltage alternating-current port.

5. The chained multi-port grid-connected interface apparatus according to claim 1, **characterized in that** the interface apparatus comprises at least two alternating-current interaction ports, the alternating-current interaction ports are connected in series, and the serially connected ports are defined as second medium voltage alternating-current ports.

6. The chained multi-port grid-connected interface apparatus according to claim 1, **characterized in that** the interface apparatus comprises at least two direct-current interaction ports, and the direct-current interaction ports are connected in series and defined as medium voltage direct-current ports.

7. The chained multi-port grid-connected interface apparatus according to claim 1, **characterized in that** an amplitude and a phase of an output voltage of the alternating-current interaction port in the interface apparatus can be independently adjusted, and an amplitude of an output voltage of the direct-current interaction port can be independently adjusted.

8. The chained multi-port grid-connected interface apparatus according to claim 1, **characterized in that** the sub-module unit is an H-bridge power module unit composed of four groups of fully controlled power semiconductor devices.

9. The chained multi-port grid-connected interface apparatus according to claim 1, **characterized in that** the sub-module unit is a half-bridge power module unit composed of two groups of fully controlled power semiconductor devices.

10. The chained multi-port grid-connected interface apparatus according to claim 1, **characterized in that** the interface apparatus further comprises at least one bypass switch, and the bypass switch is connected in parallel to the alternating-current ends of the sub-module units.

11. The chained multi-port grid-connected interface apparatus according to claim 1, **characterized in that** the interface apparatus further comprises at least one direct-current switch, and the direct-current switch is connected in series between the sub-module units and the direct-current converter or the direct-alternating converter.

12. A method for controlling the chained multi-port grid-connected interface apparatus according to any one of claims 1-11, **characterized in that** when the apparatus receives a start command, the method comprises the following steps:
step 1: starting power converter units in the sub-module units in the commutation chain of the grid-connected interface apparatus;
step 2: performing closed-loop control on a voltage of the direct-current end of each sub-module unit to make the voltage of the direct-current end of each sub-module unit stable;
step 3: after the voltage of the direct-current end of each sub-module unit is stable, starting the direct-current converter and the direct-alternating converter in the chained multi-port grid-connected interface apparatus, and controlling the on-off of power semiconductor devices in the direct-current converter and the direct-alternating converter, to enable a current flowing through the direct-current converter and the direct-alternating converter to be 0; and
step 4: controlling the on-off of the power semiconductor devices in the direct-current converter and the direct-alternating converter, to enable the current flowing through the direct-current converter and the direct-alternating converter to be gradually increased until the current reaches a target value.

13. A method for controlling the chained multi-port grid-connected interface apparatus according to any one of claims 1-11, **characterized in that** when the apparatus receives a stop command, the method comprises the following steps:
step 1: controlling the on-off of power semiconductor devices in the direct-current converter and the direct-alternating converter, to enable a current flowing through the direct-current converter and the direct-alternating converter to be gradually decreased till the current reaches 0;
step 2: stopping the direct-current converter and the direct-alternating converter in the chained multi-port grid-connected interface apparatus, and shutting down the power semiconductor devices; and
step 3: stopping the sub-module units in the commutation chain of the grid-connected interface apparatus, and stopping the apparatus in whole.

14. A method for controlling the chained multi-port grid-connected interface apparatus according to any one of claims 1-11, **characterized in that** when a sub-module unit in the apparatus breaks down, the method comprises the following steps:
step 1: making a power semiconductor device in the broken-down sub-module unit stop working, and simultaneously closing a bypass switch connected in parallel to the sub-module unit; and
step 2: stopping the direct-current converter and the direct-alternating converter in the chained multi-port grid-connected interface apparatus, and shutting down the power semiconductor device.

15. The method according to claim 14, **characterized in that** step 2 comprises stopping the direct-current converter and the direct-alternating converter in the chained multi-port grid-connected interface apparatus, shutting down the power semiconductor device, and simultaneously separating a corresponding direct-current switch.

16. A method for controlling the chained multi-port grid-connected interface apparatus according to any one of claims 1-11, **characterized in that** when the direct-current converter or direct-alternating converter in the apparatus breaks down, the method comprises the following steps:
step 1: making a power semiconductor device of the broken-down direct-current converter or direct-alternating converter stop working; and
step 2: separating a corresponding direct-current switch.

17. A system comprising the chained multi-port grid-connected interface apparatus according to any one of claims 1-11, **characterized in that** the system comprises the chained multi-port grid-connected interface apparatus and low-voltage units connected thereto,
the low-voltage units comprise a direct-current power supply, an alternating-current power supply, an energy storage unit, a direct-current load or an alternating-current load, wherein the direct-current interaction port in the interface apparatus is connected to the direct-current power supply, the energy storage unit or the direct-current load, and the alternating-current interaction port in the interface apparatus is connected to the alternating-current power supply or the alternating-current load.

18. An inverter comprising the chained multi-port grid-connected interface apparatus according to any one of claims 1-11, **characterized in that** the inverter comprises three phases, each phase comprises an upper bridge arm and a lower bridge arm, each bridge arm comprises series connection of a reactor and the interface apparatus, the upper bridge arm and the lower bridge arm are combined to form a phase unit, and a connection point of the upper bridge arm and the lower bridge arm is a midpoint;
leading-out ends of the three upper bridge arms are connected together as a positive end of the inverter, and leading-out ends of the three lower bridge arms are connected together as a negative end of the inverter; and the midpoints of the bridge arms of the three phases of the inverter are connected to a power grid, the positive end of the inverter is connected to a positive electrode of a direct-current transmission line, and the negative end of the inverter is connected to a negative electrode of the direct-current transmission line.

19. An inverter comprising the chained multi-port grid-connected interface apparatus according to any one of claims 1-11, **characterized in that** the inverter comprises three phase units, each phase unit comprises series connection of the interface apparatus and a reactor, ends of the three phase units are connected to form a star connection, and the other ends of the three phase units are connected to three phases on a power grid side, respectively.

20. An inverter comprising the chained multi-port grid-connected interface apparatus according to any one of claims 1-11, **characterized in that** the inverter comprises three phase units, each phase unit comprises series connection of the interface apparatus and a reactor, the three phase units are connected end-to-end to form an angle connection, and three end-to-end connected connection points are connected to three phases on a power grid side, respectively.
